# EUROPEAN PATENT APPLICATION

(11) **EP 2 701 206 A1**
(43) Date of publication of application: **26.02.2014**
(21) Application number: 12830864.0
(22) Date of filing: 29.06.2012
(51) Int. Cl.: H01L 31/042

(54) **SOLAR CELL MODULE EQUIPPED WITH SNOW-MELTING FUNCTION**

(71) Applicant: Fuji Electric Co., Ltd., Kawasaki-shi Kanagawa 210-9530 (JP)
(72) Inventor: YOKOYAMA, Hisanobu, Kanagawa 210-9530 (JP)
(74) Representative: Appelt, Christian W.
(86) International application number: PCT/JP2012/066691
(87) International publication number: WO 2014/002253

(57) **Abstract**

There is provided a photovoltaic module with snow melting function such that it is possible to efficiently melt snow accumulated on the photovoltaic module.

The photovoltaic module with snow melting function includes a photovoltaic cell 1, a heat transfer plate 4 joined to the non-light receiving surface side of the photovoltaic cell 1 via a sealer layer 3b, a surface protection layer 2 joined to the light receiving surface side of the photovoltaic cell 1 via a sealer layer 3a, and an external power supply 10 which applies a current to the photovoltaic cell 1, thus causing the photovoltaic cell 1 to generate heat to a temperature at which it is possible to melt snow, and the whole of the front surface is formed to be flat so as not to protrude from the surface protection layer 2.

## Description

### Technical Field

The present invention relates to a photovoltaic module with snow melting function such that it is possible to melt snow accumulated on the photovoltaic module.

### Background Art

With a photovoltaic module used by being mounted on the roof or the like of a building, when snow is accumulated on the photovoltaic module, a photovoltaic cell in a portion in which snow is accumulated cannot receive sunlight, and cannot generate electricity. As this condition continues until the snow accumulated on the photovoltaic module melts, it is necessary to remove the snow accumulated on the photovoltaic module in a snowfall region or the like. As one method of removing snow accumulated on the photovoltaic module, there is a method of melting snow accumulated on the photovoltaic module by applying a current to a photovoltaic cell and causing the photovoltaic cell to generate heat.

For example, PTL 1 discloses a photovoltaic panel such that an architrave-like frame is provided around the peripheral edge of a solar cell, and external power is supplied to the solar cell in order to melt snow, thus causing the solar cell to generate heat, wherein a heat transfer plate which transfers the heat generated by the solar cell to the frame is provided on the rear surface side of the solar cell.

### Citation List

### Patent Literature

PTL 1: JP-A-2001-81918

### Summary of Invention

### Technical Problem

The photovoltaic panel of PTL 1 is arranged so that the heat transfer plate transfers the heat, generated by the solar cell as a result of the supply of the external power, from the solar cell to the frame, and the frame is warmed, thereby melting snow falling onto the top surface of the frame, meaning that it is possible to prevent water generated by snow melting (snowmelt water) from refreezing on the top surface of the frame.

However, with the photovoltaic panel of PTL 1, as the frame enclosing the peripheral edge of the solar cell is provided protruding beyond the front surface of the solar cell, snowmelt water is liable to accumulate in a stepped portion between the solar cell and frame. Because of this, the snowmelt water accumulated in the stepped portion refreezes, and there has been a danger that photovoltaic performance decreases in only this portion, or a situation close to a hot spot arises, thus causing trouble.

Therefore, an object of the invention is to provide a photovoltaic module with snow melting function such that it is possible to efficiently melt snow accumulated on the photovoltaic module.

### Solution to Problem

A photovoltaic module with snow melting function is characterized by including a photovoltaic cell; a heat transfer plate joined to the non-light receiving surface side of the photovoltaic cell via a sealer layer; a surface protection layer joined to the light receiving surface side of the photovoltaic cell via a sealer layer; and an external power supply device which applies a current to the photovoltaic cell, thus causing the photovoltaic cell to generate heat to a temperature at which it is possible to melt snow, wherein the whole of the front surface is formed to be flat so as not to protrude from the surface protection layer.

According to the photovoltaic module with snow melting function of the invention, as the heat transfer plate is disposed on the non-light receiving surface side of the photovoltaic cell, when a current is applied to the photovoltaic cell from the external power supply, heat generated by the photovoltaic cell is conducted through the heat transfer plate to uniformly heat the front surface of the photovoltaic module, and it is thus possible to make the surface temperature uniform. Because of this, it is possible to uniformly melt snow accumulated on the photovoltaic module, and thus possible to remove patchy lingering snow. Further, as the whole of the front surface is formed to be flat so as not to protrude from the surface protection layer, snowmelt water can be drained without being retained on the photovoltaic module, and it is thus possible to prevent trouble caused by the snowmelt water refreezing.

In the photovoltaic module with snow melting function of the invention, it is preferable that a heat insulating material is further disposed on the back surface side of the heat transfer plate. According to this aspect, it is possible to prevent heat generated by the photovoltaic cell from being transferred to a frame of a roof or the like, and thus possible to efficiently heat the front surface of the photovoltaic module.

In the photovoltaic module with snow melting function of the invention, it is preferable that a heat-resistant insulating resin sheet is inserted between the photovoltaic cell and heat transfer plate. It is preferable that the heat-resistant insulating resin sheet is configured of fluorine resin, and that the thickness thereof is 15µm or more. Furthermore, it is preferable that the heat-resistant insulating resin sheet is stuck to the non-light receiving surface side of the photovoltaic cell via the sealer layer, and that the heat transfer plate is joined to the back surface side of the heat-resistant insulating resin sheet. According to this aspect, it is possible to ensure the insulating properties between the photovoltaic cell and heat transfer plate, thus providing superior safety.

In the photovoltaic module with snow melting function of the invention, it is preferable that the heat transfer plate is a 0.3 to 1.0mm thick plate formed from a material with a thermal conductivity of 14kcal/m.h.°C or more.

In the photovoltaic module with snow melting function of the invention, it is preferable that the heat transfer plate is one type selected from among a steel plate, a stainless plate, and an aluminium plate.

According to each heretofore described aspect, it is possible to efficiently transfer heat generated by the photovoltaic cell, thus making the surface temperature of the photovoltaic module more uniform.

In the photovoltaic module with snow melting function of the invention, it is preferable that a current which the external power supply applies to the photovoltaic cell when melting snow accumulated on the photovoltaic module is controlled so that the heat generation density of the photovoltaic cell is 100 to 500W/m². According to this aspect, it is possible to efficiently melt snow accumulated on the photovoltaic module.

### Advantageous Effects of Invention

According to the photovoltaic module with snow melting function of the invention, as the heat transfer plate is disposed on the non-light receiving surface side of the photovoltaic cell, when a current is applied to the photovoltaic cell from the external power supply, heat generated by the photovoltaic cell is conducted through the heat transfer plate to uniformly heat the front surface of the photovoltaic module, and it is thus possible to make the surface temperature uniform. Because of this, it is possible to uniformly melt snow accumulated on the photovoltaic module, and thus possible to remove patchy lingering snow. Further, as the whole of the front surface is formed to be flat so as not to protrude from the surface protection layer, snowmelt water can be drained without being retained on the photovoltaic module, and it is thus possible to prevent trouble caused by the snowmelt water refreezing.

### Brief Description of Drawings

[Fig. 1] Fig. 1 is a schematic view of a first embodiment of a photovoltaic module with snow melting function of the invention.
[Fig. 2] Fig. 2 is a schematic view of a second embodiment of the photovoltaic module with snow melting function of the invention.
[Fig. 3] Fig. 3 is a schematic view of a third embodiment of the photovoltaic module with snow melting function of the invention.
[Fig. 4] Fig. 4 is a schematic view of a fourth embodiment of the photovoltaic module with snow melting function of the invention.

### Description of Embodiments

### (First Embodiment)

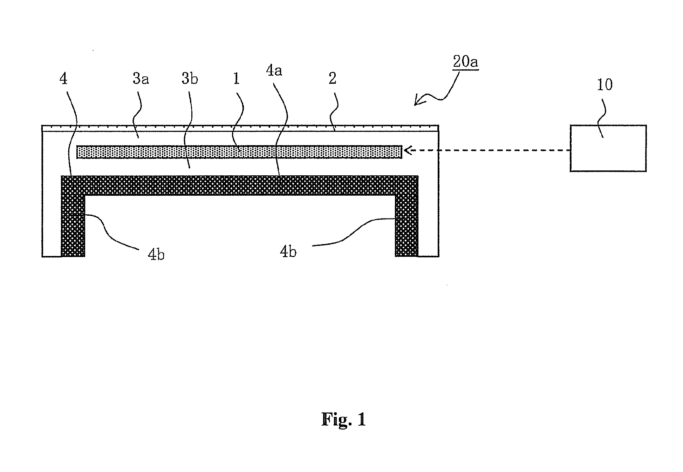

A description will be given, using Fig. 1, of a first embodiment of a photovoltaic module with snow melting function of the invention.

Reference numeral 1 in Fig. 1 is a photovoltaic cell, which is configured by sequentially stacking a first electrode layer, a photoelectric conversion layer, and a second electrode layer on one surface of a substrate.

The substrate of the photovoltaic cell 1 is preferably a substrate superior in heat resistance. It is possible to use, for example, a flexible film substrate made from polyimide, polyethylenenaphthalate, polyethersulfone, polyethyleneterephthalate, aramid, or the like, a glass substrate, or a stainless substrate. It is possible to create a flexible photovoltaic cell by using a flexible film substrate. It goes without saying that the substrate, when disposed on the light incidence side, should be configured of a light transmissive material.

Of the first electrode layer and second electrode layer of the photovoltaic cell 1, an electrode layer disposed on the light incidence side is formed from transparent conductive oxide such as ITO, SnO, or ZnO. Also, an electrode layer disposed opposite the light incidence side is formed from a conductive metal such as Ag, Ag alloy, Ni, Ni alloy, Al, or Al alloy. Also, a layer formed from transparent conductive oxide such as ITO, SnO, or ZnO (hereafter referred to as a transparent conductive oxide layer) may be stacked on a layer formed from such a conductive metal (hereafter referred to as a conductive metal layer). Each electrode layer, a formation method thereof not particularly being limiting, can be formed by forming each kind of electrode material into a film using any film forming method known in the art, such as a vapor deposition method, a sputtering method, or a plating.

The photoelectric conversion layer of the photovoltaic cell 1 is not particularly limiting. Examples include a microcrystal silicon semiconductor layer, an amorphous silicon semiconductor layer, an amorphous silicon germanium semiconductor layer, a CIGS semiconductor layer, and an organic photoelectric conversion layer. Furthermore, the photoelectric conversion layer may be of a multi-junction structure wherein a plurality of semiconductor cells are stacked.

An external power supply 10 is electrically connected to the photovoltaic cell 1. The external power supply 10 is configured in such a way as to apply a current to the photovoltaic cell 1, thus causing the photovoltaic cell 1 to generate heat to a temperature at which it is possible to melt snow.

Herein, as snow melting heat is 80kcal/kg, the amount of heat necessary to melt snow when a snow accumulation is 1 to 3kg/m²·h is 80 to 240kcal/m²·h (93 to 278w/m²). When allowing for a heat loss or the like, a heat generation density necessary to melt a snow accumulation of 1 to 3kg/m²·h is 100 to 500W/m². As it is often the case that a snow accumulation at which it is necessary to melt snow is approximately 1 to 3kg/m²·h, it is preferable that the current which the external power supply 10 applies to the photovoltaic cell 1 when melting snow accumulated on the photovoltaic module is controlled so that the heat generation density of the photovoltaic cell 1 is 100 to 500W/m².

A surface protection layer 2 is joined to the light receiving surface side of the photovoltaic cell 1 via a sealer layer 3a. Further, the whole of the front surface is formed to be flat so as not to protrude from the surface protection layer 2.

The sealer layer 3a is not particularly limited in material. Examples include polyethylene resin, ethylenevinylacetate copolymer (EVA), epoxy resin, urethane resin, silicon resin, acrylic resin, polyisobutylene, and polyethyleneterephthalate. Among them, polyethylene resin and ethylenevinylacetate copolymer (EVA) are preferably applied to the photovoltaic module because they have a rich record of having been applied to the photovoltaic module. Furthermore, as means of improving the thermal conductivity of a sealer layer, it is also conceivable to contain therein heat transfer particles such as diamond particles or silicon nitride particles.

The film thickness of the sealer layer 3a is preferably 0.3 to 1.0mm, and more preferably 0.3 to 0. 6mm. When the film thickness is less than 0.3mm, it may happen that properties such as water resistant properties and insulating properties decrease, thus posing a problem in handling the sealer layer 3a. When the film thickness is over 1.0mm, it may happen that thermal resistance increases and it is thus not possible to efficiently heat the front surface of the photovoltaic module.

A material superior in transparency, weather resistance, and heat resistance is preferable for the surface protection layer 2. Examples include films made from tetrafluoroethylene-ethylene copolymer, vinylidene fluoride resin, polychlorotrifluoroethylene resin, ETFE (ethylene tetrafluoroethylene), acrylic resin, polychlorotrifluoroethylene coated acrylic resin, and polyester resin.

The film thickness of the surface protection layer 2 is preferably 0. 02 to 0.1mm, and more preferably 0.025 to 0. 05mm. When the film thickness is less than 0.025mm, it may happen that properties such as water resistant properties and insulating properties decrease, thus posing a problem in handling the surface protection layer 2.

A heat transfer plate 4 is joined to the non-light receiving surface side of the photovoltaic cell 1 via a sealer layer 3b.

As the material of the sealer layer 3b, it is possible to use a material the same as that of the heretofore described sealer layer 3a.

The film thickness of the sealer layer 3b is more preferably 0.3 to 0.6mm. When the film thickness is less than 0.3mm, it may happen that properties such as water resistant properties and insulating properties decrease, thus posing a problem in handling the sealer layer 3b. When the film thickness is over 1.0mm, it may happen that thermal resistance increases and it is thus not possible to efficiently heat the front surface of the photovoltaic module.

In this embodiment, the heat transfer plate 4 is configured of a heat transfer portion 4a disposed on the non-light receiving surface side of the photovoltaic cell 1 and leg portions 4b formed by bending the end portions of the heat transfer portion 4a.

The thermal conductivity of the heat transfer plate 4 is preferably 14kcal/m.h.°C or more. When the thermal conductivity of the heat transfer plate is too low, it may happen that it is not possible to efficiently heat the front surface of the photovoltaic module. Preferred specific examples of the heat transfer plate include a copper plate (thermal conductivity: 30 to 40kcal/m.h.°C), a stainless plate (thermal conductivity: 14 to 20kcal/m.h.°C), and an aluminium plate (thermal conductivity: 194 to 205kcal/m.h.°C). An aluminium plate is particularly preferable because it has a high thermal conductivity.

The thickness of the heat transfer plate 4 is preferably 0.3 to 1.0mm, and more preferably 0.5 to 0.8mm. When the thickness is less than 0.3mm, the strength of the module decreases, thus triggering a cost increase such as due to a need to reinforce the module.

The photovoltaic module with snow melting function 20a of Fig. 1 is such that the leg portions 4b of the heat transfer plate 4 are disposed fixed to a frame of the roof or the like of a building via a jig or the like.

The photovoltaic module with snow melting function 20a is such that when snow is accumulated thereon, a current is applied to the photovoltaic cell 1 from the external power supply 10, and the photovoltaic cell 1, by the current being applied thereto, generates heat. The heat generated by the photovoltaic cell 1 is conducted through the heat transfer plate 4 to uniformly heat the front surface of the photovoltaic module. Because of this, it is possible to uniformly melt the snow accumulated on the photovoltaic module, and thus possible to remove patchy lingering snow.

Further, in this embodiment, the photovoltaic module is of a frameless type such that the photovoltaic cell 1 is sealed by being laminated between the surface protection layer 2 joined via the sealer layer 3a and the heat transfer plate 4 joined via the sealer layer 3b, wherein the whole of the front surface is formed to be flat so as not to protrude from the surface protection layer 2, meaning that snowmelt water can be drained without being retained on the photovoltaic module, and it is thus possible to prevent trouble caused by the snowmelt water refreezing.

### (Second Embodiment)

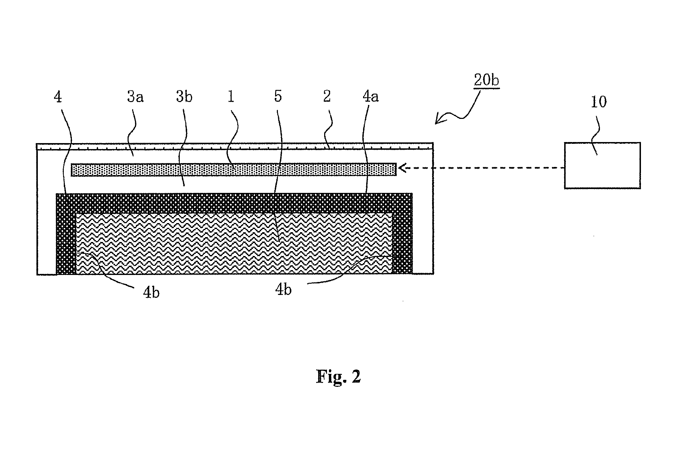

Fig. 2 shows a photovoltaic module with snow melting function 20b of a second embodiment. This embodiment differs from the heretofore described first embodiment in that a heat insulating material 5 is disposed on the back surface side of the heat transfer plate 4.

In this embodiment, the heat insulating material 5 is disposed in a space between the heat transfer portion 4a and leg portions 4b on the back surface side of the heat transfer plate 4.

The type of heat insulating material 5 is not particularly limiting. Examples include inorganic fiber thermal insulator such as glass wool or rock wool, foam insulation such as polyurethane foam or polystyrene foam, and vacuum thermal insulator. The thickness of the heat insulating material 5, as it varies according to the type of heat insulating material, is not particularly limiting. It is sufficient to adjust the thickness of the heat insulating material 5 by adjusting the length of the leg portions 4b.

According to this embodiment, it is possible to prevent heat generated by the photovoltaic cell from being transferred to a frame of a roof or the like, and thus possible to efficiently heat the front surface of the photovoltaic module. Because of this, it is possible to reduce the usage of energy necessary to melt snow, and thus possible to efficiently melt accumulated snow at low cost.

### (Third Embodiment)

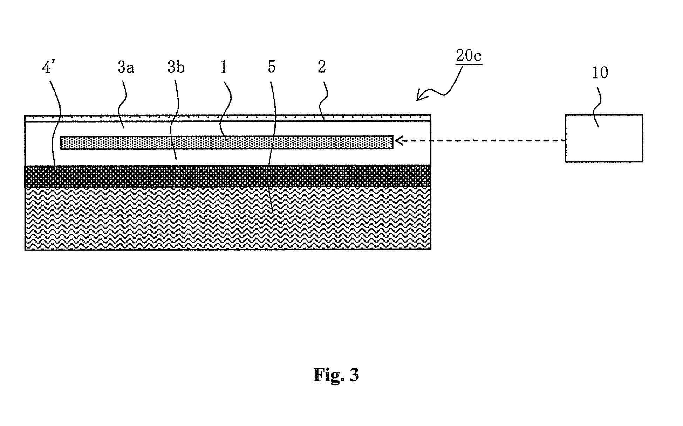

Fig. 3 shows a photovoltaic module with snow melting function 20c of a third embodiment.

In this embodiment, a heat transfer plate 4' molded plate-like is joined to the non-light receiving surface side of the photovoltaic cell 1 via the sealer layer 3b, and the heat insulating material 5 is disposed on the back surface side of the heat transfer plate 4'.

The photovoltaic module with snow melting function 20c is such that the heat insulating material 5 is disposed fixed to a frame of the roof or the like of a building via a jig or the like. That is, in the heretofore described first and second embodiments, the leg portions 4b of the heat transfer plate 4 are disposed fixed to the frame, but in this embodiment, the photovoltaic module 20c is disposed fixed to the frame via the heat insulating material 5. Because of this, according to this aspect, it is possible to more efficiently prevent heat generated by the photovoltaic cell from being transferred to the frame of the roof or the like.

### (Fourth Embodiment)

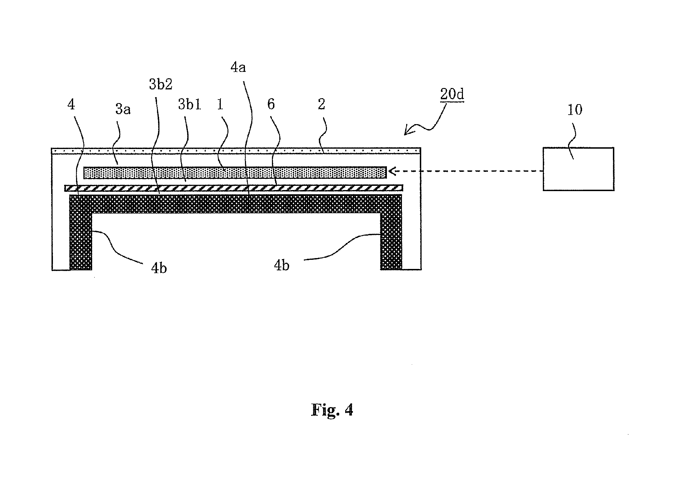

Fig. 4 shows a photovoltaic module with snow melting function 20d of a fourth embodiment.

This embodiment differs from the heretofore described first embodiment in that a heat-resistant insulating resin sheet 6 is inserted between the photovoltaic cell 1 and heat transfer plate 4.

That is, in this embodiment, the heat-resistant insulating resin sheet 6 is stuck to the non-light receiving surface side of the photovoltaic cell 1 via a sealer layer 3b1. Further, the heat transfer plate 4 is joined to the back surface side of the heat-resistant insulating resin sheet 6 via a sealer layer 3b2.

The material of the sealer layer 3b1 joining the heat-resistant insulating resin sheet 6 and photovoltaic cell 1 is not particularly limiting. It is possible to use a material the same as that of the heretofore described sealer layer 3b. Also, the film thickness of the sealer layer 3b1 is preferably 0.15 to 0.5µm, and more preferably 0.15 to 0.3µm. When the film thickness is over 0.5µm, the thermal conductivity decreases, and the material cost also rises, meaning that such an increase in thickness is not economical.

The material of the sealer layer 3b2 joining the heat-resistant insulating resin sheet 6 and heat transfer plate 4 is not particularly limiting. It is possible to use a material the same as that of the heretofore described sealer layer 3b. Also, the film thickness of the sealer layer 3b2 is preferably 0.15 to 0.5µm, and more preferably 0.15 to 0.3µm. When the film thickness is over 0.5µm, the thermal conductivity decreases, and the material cost also rises, meaning that such an increase in thickness is not economical.

The heat-resistant insulating resin sheet 6 may be of any material, provided that it is superior in heat resistance and insulating properties. A preferred material is fluorine resin. Examples of fluorine resin include partially fluorinated resin and fluorinated resin copolymer, such as polychlorotrifluoroethylene (trifluorinated resin: PCTFE, CTFE), polyvinylidene difluoride (PVDF), vinylidene fluoride resin, polyvinyl fluoride (PVF), perfluoroalkoxyfluorine resin (PFA) tetrafluoroethylene-ethylene copolymer, tetrafluoroethylene propylene hexafluoride copolymer (FEP), trifluorochloroethylene resin, ethylene chlorotrifluoroethylene copolymer (ECTFE), or ethylene tetrafluoroethylene copolymer (ETFE).

The thickness of the heat-resistant insulating resin sheet 6 varies according to the material. For example, when the heat-resistant insulating resin sheet 6 is configured of fluorine resin, the thickness thereof is preferably 15µm or more, and more preferably 25µm to 50µm. For example, a breakdown voltage of 3kV or higher is required to clear an insulation test based on JISC8991. When ETFE is used for the heat-resistant insulating resin sheet, it is possible to achieve a breakdown voltage of 3kV or higher by setting the thickness to 15µm or more.

According to this embodiment, it is possible to ensure the insulating properties between the photovoltaic cell 1 and heat transfer plate 4, thus providing superior safety.

In this embodiment too, in the same way as in the heretofore described second and third embodiments, the heat insulating material 5 may be disposed on the back surface side of the heat transfer plate 4.

### Reference Signs List

1: Photovoltaic cell
2: Surface protection layer
3a, 3b, 3b1, 3b2: Sealer layer
4, 4': Heat transfer plate
5: Heat insulating material
6: Heat-resistant insulating resin sheet
10: External power supply
20a, 20b, 20c, 20d: Photovoltaic module

## Claims

1. A photovoltaic module with snow melting function, **characterized by** comprising: a photovoltaic cell; a heat transfer plate joined to the non-light receiving surface side of the photovoltaic cell via a sealer layer; a surface protection layer joined to the light receiving surface side of the photovoltaic cell via a sealer layer; and an external power supply which applies a current to the photovoltaic cell, thus causing the photovoltaic cell to generate heat to a temperature at which it is possible to melt snow, wherein
the whole of the front surface being formed to be flat so as not to protrude from the surface protection layer.

2. The photovoltaic module with snow melting function according to claim 1, **characterized in that**
a heat insulating material is further disposed on the back surface side of the heat transfer plate.

3. The photovoltaic module with snow melting function according to claim 1 or 2, **characterized in that**
a heat-resistant insulating resin sheet is inserted between the photovoltaic cell and heat transfer plate.

4. The photovoltaic module with snow melting function according to claim 3, **characterized in that**
the heat-resistant insulating resin sheet is configured of fluorine resin, and the thickness thereof is 15µm or more.

5. The photovoltaic module with snow melting function according to claim 3 or 4, **characterized in that**
the heat-resistant insulating resin sheet is stuck to the non-light receiving surface side of the photovoltaic cell via the sealer layer, and the heat transfer plate is joined to the back surface side of the heat-resistant insulating resin sheet.

6. The photovoltaic module with snow melting function according to any one of claims 1 to 5, **characterized in that**
the heat transfer plate is a 0.3 to 1.0mm thick plate formed from a material with a thermal conductivity of 14kcal/m.h.°C or more.

7. The photovoltaic module with snow melting function according to any one of claims 1 to 6, **characterized in that**
the heat transfer plate is one type selected from among a steel plate, a stainless plate, and an aluminium plate.

8. The photovoltaic module with snow melting function according to any one of claims 1 to 7, **characterized in that**
a current which the external power supply applies to the photovoltaic cell when melting snow accumulated on the photovoltaic module is controlled so that the heat generation density of the photovoltaic cell is 100 to 500W/m².
